# EUROPEAN PATENT SPECIFICATION

(11) **EP 4 685 199 B1**
(45) Date of publication and mention of the grant of the patent: **07.10.2026**
(21) Application number: 25191210.1
(22) Date of filing: 23.07.2025
(51) Int. Cl.: C09D 133/04, C08F 216/14, C09K 23/00, C09K 23/04, C09K 23/42, C08F 2/26, C08F 2/30

(54) **SURFACTANT COMPOSITION, COMPOSITION FOR EMULSION POLYMERIZATION, METHOD OF PRODUCING POLYMER EMULSION, AND POLYMER EMULSION**
TENSIDZUSAMMENSETZUNG, ZUSAMMENSETZUNG ZUR EMULSIONSPOLYMERISATION, VERFAHREN ZUR HERSTELLUNG EINER POLYMEREMULSION UND POLYMEREMULSION
COMPOSITION TENSIOACTIVE, COMPOSITION POUR POLYMÉRISATION EN ÉMULSION, PROCÉDÉ DE PRODUCTION D'ÉMULSION DE POLYMÈRE ET ÉMULSION DE POLYMÈRE

(30) Priority: 25.07.2024 JP 2024119376
(43) Date of publication of application: 28.01.2026
(73) Proprietor: ADEKA CORPORATION, Arakawa-ku Tokyo 116-8554 (JP)
(72) Inventor: IGARASHI, Shuhei, Arakawa-ku, Tokyo, 116-8554 (JP); KAWAGUCHI, Akihiro, Arakawa-ku, Tokyo, 116-8554 (JP); OSHITOBE, Chika, Arakawa-ku, Tokyo, 116-8554 (JP); TSUKAHARA, Naoki, Arakawa-ku, Tokyo, 116-8554 (JP)
(74) Representative: Müller-Boré & Partner Patentanwälte PartG mbB

(56) References cited:
- WO-A1-2020/030428
- JP-A- 2023 154 828
- KR-A- 20090 054 640
- US-A1- 2004 048 963
- US-A1- 2019 217 265

## Description

### Technical Field

This disclosure relates to a surfactant composition, a composition for emulsion polymerization comprising the surfactant composition, a method of producing a polymer emulsion using the surfactant composition, or a polymer emulsion obtained by the production method using the surfactant composition, the surfactant composition being capable of providing a polymer emulsion excellent in pressure-sensitive adhesive characteristics, mechanical stability, and water resistance.

### Background Art

A resin emulsion of, for example, an acrylic resin or a styrene-based resin is used for a paint, an adhesive, a pressure-sensitive adhesive, a coating agent, an ink, a cement, a mortar, a car wax, or the like. In order to improve various characteristics of the resin emulsion, there has been known a method using a reactive emulsifier when the resin emulsion is produced by subjecting a raw material monomer to emulsion polymerization, and various reactive emulsifiers have hitherto been proposed.

As the reactive emulsifier, there have been known, for example, various reactive emulsifiers each having a (meth)allyl ether group as a reactive group (Patent Literatures 1 and 2) and various reactive emulsifiers each having a (meth)acrylic acid ester group as a reactive group (Patent Literatures 3 and 4). Patent literature 5 discloses a surfactant composition, comprising: 28-30 parts by mass of a reactive anionic surfactant comprising anionic -SO₃⁻ groups, with respect to a total amount of the surfactant composition; and 13-17 parts by mass of a reactive nonionic surfactant comprising alkylene-oxide groups, with respect to the total amount of the surfactant composition.

### Citation List

### Patent Literature

[PTL1 1] JP S63-054927 A
[PTL 2] JP S63-319035 A
[PTL 3] JP S63-077530 A
[PTL 4] JP S63-185436 A.
[PTL5] KR20090054640A

### SUMMARY OF THE INVENTION

### Technical Problem

However, in each of the reactive emulsifiers described in PTLs 1-4, the pressure-sensitive adhesive characteristics, mechanical stability, and water resistance of a polymer emulsion to be obtained are insufficient. Accordingly, in the market, there has still been required a surfactant composition having excellent characteristics.

Accordingly, according to at least one embodiment of this disclosure, there is provided a surfactant composition capable of providing a polymer emulsion excellent in pressure-sensitive adhesive characteristics, mechanical stability, and water resistance.

### Solution to Problem

The inventors have made extensive investigations in order to achieve the above-mentioned object, and as a result, have found that a surfactant composition comprising a specific anionic surfactant and a specific nonionic surfactant in specific amounts can provide a polymer emulsion excellent in pressure-sensitive adhesive characteristics, mechanical stability, and water resistance. Thus, the inventors have reached this disclosure. That is, according to at least one embodiment of this disclosure, there is provided a surfactant composition, comprising: 95.5 mass% to 99.2 mass% of an anionic surfactant represented by the following general formula (1) with respect to a total amount of the surfactant composition; and 0.8 mass% to 4.5 mass% of a nonionic surfactant represented by the following general formula (2) with respect to the total amount of the surfactant composition: 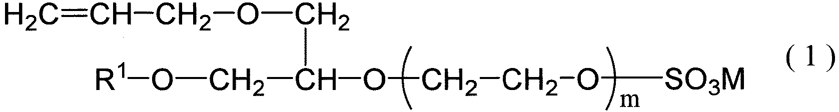 where R¹ represents an alkyl group having 8 to 15 carbon atoms, "m" represents a number of from 5 to 50, and M represents a hydrogen atom, an alkali metal atom, or an ammonium group; and 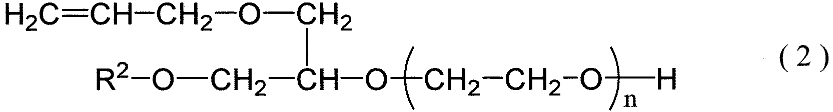 where R² represents an alkyl group having 8 to 15 carbon atoms, and "n" represents a number of from 5 to 50.

According to at least one embodiment of this disclosure, the surfactant composition is a surfactant composition for emulsion polymerization.

According to at least one embodiment of this disclosure, there is provided a composition for emulsion polymerization, comprising the above-mentioned surfactant composition.

According to at least one embodiment of this disclosure, there is provided a method of producing a polymer emulsion, comprising polymerizing one kind or more kinds of polymerizable monomers selected from the group consisting of: an acrylate-based monomer; a styrene-based monomer; a vinyl ester-based monomer; a diene-based monomer; and an acrylonitrile-based monomer in the presence of the above-mentioned surfactant composition.

According to at least one embodiment of this disclosure, there is provided a polymer emulsion obtained by the above-mentioned method of producing a polymer emulsion using the surfactant composition.

### Advantageous Effects of Invention

The use of the above-mentioned surfactant composition can prepare the polymer emulsion excellent in pressure-sensitive adhesive characteristics, mechanical stability, and water resistance.

### Description of Embodiments

### A. Anionic Surfactant

An anionic surfactant to be used in this disclosure is an anionic surfactant represented by the following general formula (1).

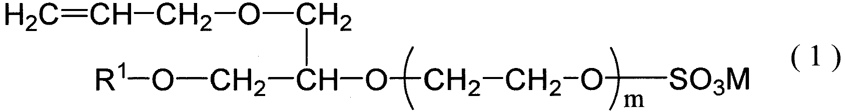

R¹ in the general formula (1) represents an alkyl group having 8 to 15 carbon atoms, and examples of such group include linear or branched alkyl groups, such as an octyl group, a branched octyl group, a nonyl group, a branched nonyl group, a decyl group, a branched decyl group, an undecyl group, a branched undecyl group, a dodecyl group, a branched dodecyl group, a tridecyl group, a branched tridecyl group, a tetradecyl group, a branched tetradecyl group, a pentadecyl group, and a branched pentadecyl group. R¹ in the general formula (1) represents preferably a linear or branched alkyl group having 10 to 15 carbon atoms, more preferably a linear or branched alkyl group having 11 to 13 carbon atoms out of the groups described above from the viewpoint that a surfactant composition capable of providing a polymer emulsion more excellent in pressure-sensitive adhesive characteristics, mechanical stability, and water resistance is obtained. In addition, R¹ in the general formula (1) represents preferably a branched alkyl group, more preferably an isoalkyl group, which is a branched alkyl group having three or more terminal methyl groups, from the viewpoint that a surfactant composition capable of providing a polymer emulsion more excellent in pressure-sensitive adhesive characteristics, mechanical stability, and water resistance is obtained. In this disclosure, R¹ in the general formula (1) represents preferably an isoalkyl group having 10 to 15 carbon atoms, more preferably an isoalkyl group having 11 to 13 carbon atoms, particularly preferably an isoundecyl group out of the groups described above from the viewpoint that a surfactant composition capable of providing a polymer emulsion particularly excellent in pressure-sensitive adhesive characteristics, mechanical stability, and water resistance is obtained.
"m" in the general formula (1) represents a number from 5 to 50. "m" in the general formula (1) represents preferably from 10 to 40, more preferably from 10 to 30 out of the numbers described above from the viewpoint that a surfactant composition capable of providing a polymer emulsion more excellent in pressure-sensitive adhesive characteristics, mechanical stability, and water resistance is obtained.

In addition, the average of values for "m" is preferably from 7 to 45, more preferably from 8 to 40, still more preferably from 10 to 30 from the viewpoint that a surfactant composition capable of providing a polymer emulsion more excellent in pressure-sensitive adhesive characteristics, mechanical stability, and water resistance is obtained.

M in the general formula (1) represents a hydrogen atom, an alkali metal atom, or an ammonium group, and examples of the alkali metal atom include a lithium atom, a sodium atom, and a potassium atom. M in the general formula (1) represents preferably a hydrogen atom, a sodium atom, a potassium atom, or an ammonium group, more preferably an ammonium group out of the atoms and group described above from the viewpoint that a surfactant composition capable of providing a polymer emulsion more excellent in pressure-sensitive adhesive characteristics, mechanical stability, and water resistance is obtained.

A method of producing the anionic surfactant represented by the general formula (1) is not particularly limited, and the anionic surfactant may be produced by a known method. For example, the anionic surfactant may be produced by a method described in Japanese Patent Application Laid-open No. 2006-075808.

### B. Nonionic Surfactant

A nonionic surfactant to be used in this disclosure is a nonionic surfactant represented by the following general formula (2).

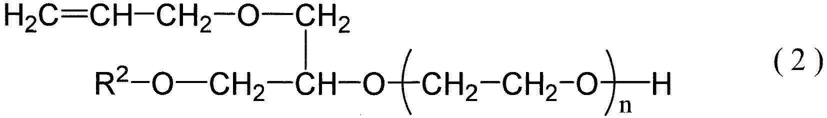

R² in the general formula (2) represents an alkyl group having 8 to 15 carbon atoms, and examples of such group include linear or branched alkyl groups, such as an octyl group, a branched octyl group, a nonyl group, a branched nonyl group, a decyl group, a branched decyl group, an undecyl group, a branched undecyl group, a dodecyl group, a branched dodecyl group, a tridecyl group, a branched tridecyl group, a tetradecyl group, a branched tetradecyl group, or a pentadecyl group. R² in the general formula (2) represents preferably a linear or branched alkyl group having 10 to 15 carbon atoms, more preferably a linear or branched alkyl group having 11 to 13 carbon atoms out of the groups described above from the viewpoint that a surfactant composition capable of providing a polymer emulsion more excellent in pressure-sensitive adhesive characteristics, mechanical stability, and water resistance is obtained. In addition, R² in the general formula (2) represents preferably a branched alkyl group, more preferably an isoalkyl group, which is a branched alkyl group having three or more terminal methyl groups, from the viewpoint that a surfactant composition capable of providing a polymer emulsion more excellent in pressure-sensitive adhesive characteristics, mechanical stability, and water resistance is obtained. In this disclosure, R² in the general formula (2) represents preferably an isoalkyl group having 10 to 15 carbon atoms, more preferably an isoalkyl group having 11 to 13 carbon atoms, particularly preferably an isoundecyl group out of the groups described above from the viewpoint that a surfactant composition capable of providing a polymer emulsion particularly excellent in pressure-sensitive adhesive characteristics, mechanical stability, and water resistance is obtained.
"n" in the general formula (2) represents a number from 5 to 50. "n" in the general formula (2) represents preferably from 10 to 40, more preferably from 10 to 30 out of the numbers described above from the viewpoint that a surfactant composition capable of providing a polymer emulsion more excellent in pressure-sensitive adhesive characteristics, mechanical stability, and water resistance is obtained.

In addition, the average of values for "n" is preferably from 7 to 45, more preferably from 8 to 40, still more preferably from 10 to 30 from the viewpoint that a surfactant composition capable of providing a polymer emulsion more excellent in pressure-sensitive adhesive characteristics, mechanical stability, and water resistance is obtained.

A method of producing the nonionic surfactant represented by the general formula (2) is not particularly limited, and the nonionic surfactant may be produced by a known method. For example, the nonionic surfactant may be produced by a method described in Japanese Patent Application Laid-open No. 2002-301353.

### C. Surfactant Composition

A surfactant composition according to at least one embodiment of this disclosure is a surfactant composition comprising 95.5 mass% to 99.2 mass% of the anionic surfactant represented by the general formula (1) described above with respect to the total amount of the surfactant composition and 0.8 mass% to 4.5 mass% of the nonionic surfactant represented by the general formula (2) described above with respect to the total amount of the surfactant composition. The concentrations of the anionic surfactant and the nonionic surfactant shown below are concentrations with respect to the total amount of the above-mentioned surfactant composition unless otherwise stated. When the content of the anionic surfactant represented by the general formula (1) is less than 95.5 mass%, there is a risk that a polymer emulsion poor in pressure-sensitive adhesive characteristics and water resistance is obtained when the surfactant composition is used for emulsion polymerization. In addition, when the content is more than 99.2 mass%, there is a risk that a polymer emulsion poor in pressure-sensitive adhesive characteristics and mechanical stability is obtained when the surfactant composition is used for emulsion polymerization. Similarly, when the content of the nonionic surfactant represented by the general formula (2) is less than 0.8 mass%, there is a risk that a polymer emulsion poor in pressure-sensitive adhesive characteristics and mechanical stability is obtained when the surfactant composition is used for emulsion polymerization. In addition, when the content is more than 4.5 mass%, there is a risk that a polymer emulsion poor in pressure-sensitive adhesive characteristics and water resistance is obtained when the surfactant composition is used for emulsion polymerization. The above-mentioned surfactant composition preferably comprises 95.8 mass% to 99.1 mass% of the anionic surfactant represented by the general formula (1) and 0.9 mass% to 4.2 mass% of the nonionic surfactant represented by the general formula (2), and more preferably comprises 96.0 mass% to 99.0 mass% of the anionic surfactant represented by the general formula (1) and 1.0 mass% to 4.0 mass% of the nonionic surfactant represented by the general formula (2) from the viewpoint that a surfactant composition capable of providing a polymer emulsion more excellent in pressure-sensitive adhesive characteristics, mechanical stability, and water resistance is obtained.

The above-mentioned surfactant composition may comprise a component except the anionic surfactant represented by the general formula (1) described above and the nonionic surfactant represented by the general formula (2) described above (e.g., various components described later) as long as the effects of this disclosure are not impaired. The total content of the anionic surfactant represented by the general formula (1) and the nonionic surfactant represented by the general formula (2) in the surfactant composition is preferably 96.5 mass% or more, more preferably 97.0 mass% or more, still more preferably 99.0 mass% or more, particularly preferably 100 mass% with respect to the total amount of the surfactant composition from the viewpoint that a polymer emulsion excellent in pressure-sensitive adhesive characteristics, mechanical stability, and water resistance is easily obtained. In other words, it is particularly preferred that the above-mentioned surfactant composition consist of the anionic surfactant represented by the general formula (1) described above and the nonionic surfactant represented by the general formula (2) described above except for inevitable impurities.

The alkyl group R¹ of the anionic surfactant represented by the general formula (1) and the alkyl group R² of the nonionic surfactant represented by the general formula (2) are preferably the same alkyl group from the viewpoint that a surfactant composition capable of providing a polymer emulsion more excellent in pressure-sensitive adhesive characteristics, mechanical stability, and water resistance is obtained. Specifically, for example, the above-mentioned surfactant composition preferably comprises 95.5 mass% to 99.2 mass% of the anionic surfactant represented by the general formula (1) in which R¹ represents an alkyl group having 8 to 15 carbon atoms and 0.8 mass% to 4.5 mass% of the nonionic surfactant represented by the general formula (2) in which R² represents the same alkyl group as R¹, more preferably comprises 95.5 mass% to 99.2 mass% of the anionic surfactant represented by the general formula (1) in which R¹ represents a linear or branched alkyl group having 11 to 13 carbon atoms and 0.8 mass% to 4.5 mass% of the nonionic surfactant represented by the general formula (2) in which R² represents the same alkyl group as R¹, still more preferably comprises 95.5 mass% to 99.2 mass% of the anionic surfactant represented by the general formula (1) in which R¹ represents an isoalkyl group having 11 to 13 carbon atoms and 0.8 mass% to 4.5 mass% of the nonionic surfactant represented by the general formula (2) in which R² represents the same alkyl group as R¹, and still more preferably comprises 96.0 mass% to 99.0 mass% of the anionic surfactant represented by the general formula (1) in which R¹ represents an isoalkyl group having 11 to 13 carbon atoms and 1.0 mass% to 4.0 mass% of the nonionic surfactant represented by the general formula (2) in which R² represents the same alkyl group as R¹.

In the above-mentioned surfactant composition, the phrase "the alkyl group R¹ of the anionic surfactant represented by the general formula (1) and the alkyl group R² of the nonionic surfactant represented by the general formula (2) are the same alkyl group" means that the numbers of carbon atoms and linear or branched structures of the alkyl group R¹ of the anionic surfactant represented by the general formula (1) and the alkyl group R² of the nonionic surfactant represented by the general formula (2) are substantially the same except for an unintended structure derived from, for example, a trace component in a raw material to be used in the production of each surfactant. That is, for example, the phrase means that, when the alkyl group R¹ of the anionic surfactant represented by the general formula (1) in the surfactant composition consists of one kind of structure, the alkyl group R² of the nonionic surfactant represented by the general formula (2) also consists of the same one kind of structure, and also means that, when the surfactant composition comprises two or more kinds of the anionic surfactants represented by the general formula (1) having different R¹s, also with regard to the nonionic surfactant represented by the general formula (2), the surfactant composition comprises two or more kinds of the nonionic surfactants represented by the general formula (2) having different R²s in equivalent amounts to the contents of the anionic surfactants represented by the general formula (1) each corresponding thereto in the structure of an alkyl group. Herein, the term "equivalent amount" means that the difference between the two contents falls within 5 mass%, preferably within 3 mass%, more preferably within 1 mass%.

The addition number "m" of ethylene oxide groups of the anionic surfactant represented by the general formula (1) and the addition number "n" of ethylene oxide groups of the nonionic surfactant represented by the general formula (2) are preferably the same addition number from the viewpoint that a surfactant composition capable of providing a polymer emulsion more excellent in pressure-sensitive adhesive characteristics, mechanical stability, and water resistance is obtained. Specifically, for example, the above-mentioned surfactant composition preferably comprises 95.5 mass% to 99.2 mass% of the anionic surfactant represented by the general formula (1) in which "m" represents a number from 5 to 50 and 0.8 mass% to 4.5 mass% of the nonionic surfactant represented by the general formula (2) in which "n" represents the same number as "m", more preferably comprises 95.5 mass% to 99.2 mass% of the anionic surfactant represented by the general formula (1) in which "m" represents a number from 10 to 30 and 0.8 mass% to 4.5 mass% of the nonionic surfactant represented by the general formula (2) in which "n" represents the same number as "m", still more preferably comprises 95.5 mass% to 99.2 mass% of the anionic surfactant represented by the general formula (1) in which "m" represents 10, 20, or 30 and 0.8 mass% to 4.5 mass% of the nonionic surfactant represented by the general formula (2) in which "n" represents the same number as "m", and still more preferably comprises 96.0 mass% to 99.0 mass% of the anionic surfactant represented by the general formula (1) in which "m" represents 10 or 30 and 1.0 mass% to 4.0 mass% of the nonionic surfactant represented by the general formula (2) in which "n" represents the same number as "m".

The phrase "the addition number "m" of ethylene oxide groups of the anionic surfactant represented by the general formula (1) and the addition number "n" of ethylene oxide groups of the nonionic surfactant represented by the general formula (2) are the same addition number" means that the values of the addition number "m" of ethylene oxide groups of the anionic surfactant represented by the general formula (1) and the addition number "n" of ethylene oxide groups of the nonionic surfactant represented by the general formula (2) are the same except for an unintended structure derived from a byproduct or the like at the time of the production of each surfactant. That is, for example, the phrase means that when the addition number "m" of ethylene oxide groups of the anionic surfactant represented by the general formula (1) in the surfactant composition is one specific number, the addition number "n" of ethylene oxide groups of the nonionic surfactant represented by the general formula (2) is also the same number, and also means that, when the surfactant composition comprises two or more kinds of the anionic surfactants represented by the general formula (1) having different values for "m", also with regard to the nonionic surfactant represented by the general formula (2), the surfactant composition comprises two or more kinds of the nonionic surfactants represented by the general formula (2) having different values for "n" in equivalent amounts to the contents of the anionic surfactants represented by the general formula (1) each corresponding thereto in the addition number of ethylene oxide groups. The definition of the term "equivalent amount" is the same as that described above.

In addition, in the above-mentioned surfactant composition, when the value for the addition number "m" of ethylene oxide groups of the anionic surfactant represented by the general formula (1) and the value for the addition number "n" of ethylene oxide groups of the nonionic surfactant represented by the general formula (2) are represented by an average value of the addition numbers of the ethylene oxide groups of the anionic surfactant represented by the general formula (1) in the surfactant composition and an average value of the addition numbers of the ethylene oxide groups of the nonionic surfactant represented by the general formula (2) therein, respectively, the average value of the addition numbers of the ethylene oxide groups of the anionic surfactant represented by the general formula (1) in the above-mentioned surfactant composition and the average value of the addition numbers of the ethylene oxide groups of the nonionic surfactant represented by the general formula (2) therein are preferably values equivalent to each other from the viewpoint that a surfactant composition capable of providing a polymer emulsion more excellent in pressure-sensitive adhesive characteristics, mechanical stability, and water resistance is obtained. Herein, the phrase "average values are values equivalent to each other" means that the difference between the two values falls within 20%, preferably within 10%, more preferably within 5% with respect to the average value of the addition numbers of the ethylene oxide groups of the anionic surfactant represented by the general formula (1).

The above-mentioned surfactant composition may be used in typical applications of surfactants without particular limitations. The surfactant composition may be used for, for example, a surfactant composition for emulsion polymerization, a surfactant composition for suspension polymerization, a surfactant composition for resin modification (e.g., water repellency improvement, hydrophilicity adjustment, compatibility improvement, antistatic property improvement, antifogging property improvement, water resistance improvement, adhesive property improvement, dyeability improvement, film formation property improvement, weatherability improvement, or blocking resistance improvement), a surfactant composition for fiber processing, or a surfactant composition for fiber antifouling processing. The above-mentioned surfactant composition is preferably used as a surfactant composition for emulsion polymerization out of the applications described above from the viewpoints of the effects of this disclosure. When the above-mentioned surfactant composition is used as the surfactant composition for emulsion polymerization, its specific product category is also not limited, and the surfactant composition may be used as a surfactant composition for emulsion polymerization for producing a polymer emulsion to be used for a paint, an adhesive, a pressure-sensitive adhesive, an ink, a film, a coating agent, a paper coating agent, a sizing agent, a sealer, or the like.

A polymerizable monomer that may be used when the polymer emulsion is produced by using above-mentioned surfactant composition as a surfactant composition for emulsion polymerization is not particularly limited, and may be appropriately selected in accordance with purposes. For example, one kind or more kinds selected from the group consisting of: an acrylate-based monomer; a styrene-based monomer; a vinyl ester-based monomer; a diene-based monomer; and an acrylonitrile-based monomer may be used.

Examples of the acrylate-based monomer include methyl acrylate, ethyl acrylate, propyl acrylate, n-butyl acrylate, isobutyl acrylate, t-butyl acrylate, n-hexyl acrylate, 2-ethylhexyl acrylate, n-octyl acrylate, n-nonyl acrylate, n-decyl acrylate, lauryl acrylate, stearyl acrylate, eicosanyl acrylate, behenyl acrylate, cyclohexyl acrylate, benzyl acrylate, tetracosanyl acrylate, methyl methacrylate, ethyl methacrylate, propyl methacrylate, n-butyl methacrylate, isobutyl methacrylate, t-butyl methacrylate, n-hexyl methacrylate, 2-ethylhexyl methacrylate, n-octyl methacrylate, n-nonyl methacrylate, n-decyl methacrylate, lauryl methacrylate, 2-methoxyethyl acrylate, 2-butoxyethyl acrylate, 2-hydroxyethyl acrylate, 2-hydroxypropyl acrylate, diethylene glycol monoacrylate, polyethylene glycol monoacrylate, methoxy tetraethylene glycol acrylate, methoxy polyethylene glycol acrylate, 2-(dimethylamino)ethyl acrylate, and acrylic acid. Those acrylate-based monomers may be used alone or in combination thereof.

Examples of the styrene-based monomer include styrene, α-methylstyrene, o-methylstyrene, p-methylstyrene, p-tert-butylstyrene, 2,4-dimethylstyrene, 2-methylstyrene, 3-methylstyrene, 4-methylstyrene, 2-ethylstyrene, 3-ethylstyrene, 4-ethylstyrene, 2,4-diisopropylstyrene, 2,4-dimethylstyrene, 4-t-butylstyrene, 5-t-butyl-2-methylstyrene, methoxystyrene, 4-methoxy-3-methylstyrene, dimethoxystyrene, 2-chlorostyrene, 3-chlorostyrene, 4-chlorostyrene, 4-bromostyrene, 2-methyl-4,6-dichlorostyrene, and 2,4-dibromostyrene. Those styrene-based monomers may be used alone or in combination thereof.

Examples of the vinyl ester-based monomer include vinyl formate, vinyl acetate, vinyl propionate, vinyl butyrate, vinyl pivalate, vinyl versatate, vinyl caproate, vinyl caprylate, vinyl caprate, vinyl laurate, vinyl myristate, vinyl palmitate, vinyl stearate, vinyl oleate, and vinyl benzoate. Those vinyl ester-based monomers may be used alone or in combination thereof.

Examples of the diene-based monomer include 1,3-butadiene, isoprene, 2,3-dimethyl-1,3-butadiene, 2,3-dimethyl-1,3-butadiene, 2-chloro-1,3-butadiene, 1,3-pentadiene, 1,3-hexadiene, 2,4-hexadiene, 1,3-octadiene, 2-methyl-1,3-pentadiene, 2,3-dimethyl-1,3-pentadiene, 3,4-dimethyl-1,3-hexadiene, 2,3-diethyl-1,3-butadiene, 4,5-diethyl-1,3-octadiene, 3-butyl-1,3-octadiene, 3,7-dimethyl-1,3,6-octatriene, 2-methyl-6-methylene-1,7-octadiene, 7-methyl-3-methylene-1,6-octadiene, 1,3,7-octatriene, 2-ethyl-1,3-butadiene, 2-amyl-1,3-butadiene, 3,7-dimethyl-1,3,7-octatriene, 3,7-dimethyl-1,3,6-octatriene, 3,7,11-trimethyl-1,3,6,10-dodecatetraene, 7,11-dimethyl-3-methylene-1,6,10-dodecatriene, 2,6-dimethyl-2,4,6-octatriene, 2-phenyl-1,3-butadiene, 2-methyl-3-isopropyl-1,3-butadiene, and 1,3-cyclohexadiene. Those diene-based monomers may be used alone or in combination thereof.

Examples of the acrylonitrile-based monomer include acrylonitrile, methacrylonitrile, α-ethoxyacrylonitrile, and fumaronitrile. Those acrylonitrile-based monomers may be used alone or in combination thereof.

When the above-mentioned surfactant composition is used as the surfactant composition for emulsion polymerization, the surfactant composition is preferably used as a surfactant composition for emulsion polymerization for subjecting one kind or more kinds selected from the group consisting of: an acrylate-based monomer; a styrene-based monomer; a vinyl ester-based monomer; a diene-based monomer; and an acrylonitrile-based monomer to emulsion polymerization, is more preferably used as a surfactant composition for emulsion polymerization for subjecting one kind or more kinds selected from the group consisting of: an acrylate-based monomer; a styrene-based monomer; and a vinyl ester-based monomer to emulsion polymerization, and is still more preferably used as a surfactant composition for emulsion polymerization for subjecting one kind or more kinds selected from the group consisting of: an acrylate-based monomer; and a styrene-based monomer to emulsion polymerization from the viewpoints of the effects of this disclosure.

When the above-mentioned surfactant composition is used as the surfactant composition for emulsion polymerization, the usage amount of the surfactant composition is not particularly limited, and may be appropriately adjusted in accordance with purposes. For example, the surfactant composition is used in an amount of preferably from 0.1 part by mass to 20 parts by mass, more preferably from 0.2 part by mass to 10 parts by mass, still more preferably from 0.5 part by mass to 8 parts by mass with respect to 100 parts by mass of the total mass of one kind or more kinds of polymerizable monomers selected from the group consisting of: an acrylate-based monomer; a styrene-based monomer; a vinyl ester-based monomer; a diene-based monomer; and an acrylonitrile-based monomer.

### D. Composition for Emulsion Polymerization

A composition for emulsion polymerization according to at least one embodiment of this disclosure is a composition for emulsion polymerization comprising the surfactant composition described above. For example, the above-mentioned composition for emulsion polymerization may comprise water, a polymerizable monomer, a polymerization initiator, a chain transfer agent, a pH buffer, any other anionic surfactant except the anionic surfactant represented by the general formula (1), any other nonionic surfactant except the nonionic surfactant represented by the general formula (2), an amphoteric surfactant, a cationic surfactant, an organic solvent, a plasticizer, an antiseptic, a thickener, or a dispersant in accordance with purposes.

When the above-mentioned composition for emulsion polymerization comprises the surfactant composition and the water, the content of the water is not particularly limited, and may be adjusted in accordance with purposes. The content of the water is preferably from 1 mass% to 95 mass%, more preferably from 2 mass% to 90 mass%, still more preferably from 5 mass% to 80 mass% with respect to the total amount of the composition for emulsion polymerization from the viewpoint that a polymer emulsion excellent in pressure-sensitive adhesive characteristics, mechanical stability, and water resistance is easily obtained.

For example, the acrylate-based monomer, the styrene-based monomer, the vinyl ester-based monomer, the diene-based monomer, or the acrylonitrile-based monomer described above may be used as the polymerizable monomer that may be incorporated into the above-mentioned composition for emulsion polymerization. When the above-mentioned composition for emulsion polymerization comprises the polymerizable monomer, the content of the polymerizable monomer is not particularly limited, and may be adjusted in accordance with purposes. The content of the polymerizable monomer is preferably from 5 mass% to 90 mass%, more preferably from 10 mass% to 80 mass%, still more preferably from 20 mass% to 70 mass% with respect to the total amount of the composition for emulsion polymerization from the viewpoint that a polymer emulsion excellent in pressure-sensitive adhesive characteristics, mechanical stability, and water resistance is easily obtained.

When the above-mentioned composition for emulsion polymerization comprises the surfactant composition and the polymerizable monomer, a content ratio between the surfactant composition and the polymerizable monomer is not particularly limited, and may be adjusted in accordance with purposes. The content of the surfactant composition is preferably from 0.1 part by mass to 20 parts by mass, more preferably from 0.2 part by mass to 10 parts by mass, still more preferably from 0.5 part by mass to 8 parts by mass with respect to 100 parts by mass of the polymerizable monomer in the composition for emulsion polymerization from the viewpoint that a polymer emulsion excellent in pressure-sensitive adhesive characteristics, mechanical stability, and water resistance is easily obtained.

When the above-mentioned composition for emulsion polymerization comprises the surfactant composition, the water, and the polymerizable monomer, the content of each of the surfactant composition, the water, and the polymerizable monomer described above is not particularly limited, and may be adjusted in accordance with purposes. It is preferred that the content of the surfactant composition be from 0.1 mass% to 10 mass%, the content of the water be from 10 mass% to 70 mass%, and the content of the polymerizable monomer be from 20 mass% to 80 mass%, it is more preferred that the content of the surfactant composition be from 0.2 mass% to 8 mass%, the content of the water be from 20 mass% to 65 mass%, and the content of the polymerizable monomer be from 30 mass% to 75 mass%, and it is still more preferred that the content of the surfactant composition be from 0.5 mass% to 5 mass%, the content of the water be from 25 mass% to 60 mass%, and the content of the polymerizable monomer be from 35 mass% to 70 mass% with respect to the total amount of the composition for emulsion polymerization from the viewpoint that a polymer emulsion excellent in pressure-sensitive adhesive characteristics, mechanical stability, and water resistance is easily obtained.

Examples of the polymerization initiator that may be incorporated into the above-mentioned composition for emulsion polymerization include ammonium persulfate, sodium persulfate, potassium persulfate, ammonium peroxide, potassium peroxide, hydrogen peroxide, acetyl peroxide, lauroyl peroxide, benzoyl peroxide, isopropoxycarbonyl peroxide, tert-butoxycarbonyl peroxide, methyl ethyl ketone peroxide, cyclohexanone peroxide, t-butyl hydroperoxide, cumene hydroperoxide, di-t-butyl peroxide, dicumyl peroxide, t-butyl peroxyacetate, t-butyl peroxypivalate, 2,2'-azobisisobutyronitrile, 2,2'-azobis(2,4-dimethylvaleronitrile), 2,2'-azobis(2-methylvaleronitrile), 2,2'-azobis(2-cyclopropylpropionitrile), dimethyl 2,2'-azobisisobutyrate, 2,2'-azobis[2-(hydroxymethyl)propionitrile], 2,2'-azobis(2-amidinopropane) dihycrochloride, 2,2'-azobis-2-methylpropionamidine hydrochloride, and 2,2'-azobis-2-(2-imidazolin-2-yl)propane hydrochloride. Those polymerization initiators may be incorporated alone or in combination thereof. In addition, an accelerator, such as sodium bisulfite, a metabisulfite, sodium hypophosphite, an Fe(II) salt such as Mohr's salt, sodium hydroxymethanesulfinate dihydrate, hydroxylamine hydrochloride, thiourea, sodium L-ascorbate, or sodium erythorbate, may be used in addition to the polymerization initiator. For example, a redox initiator consisting of a combination of a persulfate and sodium bisulfite, a combination of a peroxide and sodium ascorbate, or the like may be used.

When the above-mentioned composition for emulsion polymerization comprises the polymerization initiator, the content of the polymerization initiator is not particularly limited, and may be adjusted in accordance with purposes. The content is preferably from 0.01 mass% to 5 mass%, more preferably from 0.02 mass% to 3 mass%, still more preferably from 0.05 mass% to 2 mass% with respect to the total amount of the composition for emulsion polymerization from the viewpoint that a polymer emulsion excellent in pressure-sensitive adhesive characteristics, mechanical stability, and water resistance is easily obtained.

Examples of the chain transfer agent that may be incorporated into the above-mentioned composition for emulsion polymerization include butyl mercaptan, pentyl mercaptan, octyl mercaptan, dodecyl mercaptan, tetradecyl mercaptan, hexadecyl mercaptan, octadecyl mercaptan, glycidyl mercaptan, mercaptoacetic acid, mercaptoethanol, mercaptopropionic acid, 2,3-dimercapto-1-propanol, aminoethanethiol, thioglycolic acid, thiomalic acid, ethyl thioglycolate, n-butyl thioglycolate, methoxybutyl thioglycolate, 2-ethylhexyl thioglycolate, hexanedithiol, decanedithiol, 1,4-butanediol bisthiopropionate, 1,4-butanediol bisthioglycolate, ethylene glycol bisthioglycolate, ethylene glycol bisthiopropionate, trimethylolpropane tristhioglycolate, trimethylolpropane tristhiopropionate, trimethylolpropane tris(3-mercaptobutyrate), pentaerythritol tetrakisthioglycolate, pentaerythritol tetrakisthiopropionate, 2,4,6-trimercapto-s-triazine, 2-(N,N-dibutylamino)-4,6-dimercapto-s-triazine, α-terpinene, γ-terpinene, and 2,4-diphenyl-4-methyl-1-pentene. Those chain transfer agents may be incorporated alone or in combination thereof.

The pH buffer that may be incorporated into the above-mentioned composition for emulsion polymerization is not particularly limited as long as the buffer is a compound having a pH-buffering function, and examples thereof include sodium carbonate, potassium carbonate, ammonium carbonate, sodium bicarbonate, potassium bicarbonate, sodium formate, potassium formate, ammonium formate, sodium acetate, potassium acetate, ammonium acetate, sodium phosphate monobasic, potassium phosphate monobasic, sodium phosphate dibasic, potassium phosphate dibasic, sodium phosphate tribasic, potassium phosphate tribasic, acetic acid, phosphoric acid, formic acid, glycine, alanine, valine, leucine, isoleucine, serine, asparagine, glutamine, arginine, and lysine. Those pH buffers may be incorporated alone or in combination thereof.

Examples of the other anionic surfactant (except the anionic surfactant represented by the general formula (1)) that may be incorporated into the above-mentioned composition for emulsion polymerization include a fatty acid soap, a higher alcohol sulfate ester salt, a sulfurized olefin salt, a higher alkyl sulfonate salt, an α-olefin sulfonate salt, a sulfated fatty acid salt, a sulfonated fatty acid salt, a phosphate ester salt, a sulfate ester salt of a fatty acid ester, a glyceride sulfate ester salt, a sulfonate salt of a fatty acid ester, an α-sulfo fatty acid methyl ester salt, a polyoxyalkylene alkyl ether sulfate ester salt, a polyoxyethylene alkyl phenyl ether sulfate ester salt, a sulfate ester salt of an alkylene oxide adduct of a fatty acid alkanolamide, a sulfosuccinic acid ester, an alkylbenzene sulfonate salt, an alkylnaphthalene sulfonate salt, an alkylbenzimidazole sulfonate salt, an N-acyl-N-methyltaurine salt, an acyloxyethane sulfonate salt, an alkoxyethane sulfonic acid, an N-acyl-N-carboxyethyltaurine or a salt thereof, and an alkyl or alkenylaminocarboxymethyl sulfate salt. Those anionic surfactants may be incorporated alone or in combination thereof.

Examples of the other nonionic surfactant (except the nonionic surfactant represented by the general formula (2)) that may be incorporated into the above-mentioned composition for emulsion polymerization include a polyoxyethylene alkyl ether, a polyoxyethylene alkyl phenyl ether, a glycerin fatty acid ester, a polyglycerin fatty acid ester, a sorbitan fatty acid ester, a polyoxyethylene fatty acid ester, a polyoxyethylene sorbitan fatty acid ester, a polyoxyethylene alkylamine, polyoxyethylene-polyoxypropylene ethylenediamine, a polyoxyethylene alkylamide, a polyoxyethylene castor oil, a polyoxyethylene hydrogenated castor oil, a polyoxyethylene rosin ester, a polyoxyethylene lanolin ether, an acetylene glycol ethylene oxide adduct, and a copolymer of two or more kinds of alkylene oxides such as an ethylene oxide-propylene oxide block copolymer. Those nonionic surfactants may be incorporated alone or in combination thereof.

Examples of the amphoteric surfactant that may be incorporated into the above-mentioned composition for emulsion polymerization include: an alkylbetaine-type amphoteric surfactant, such as an alkyldimethylbetaine or an alkyldihydroxyethylbetaine; an imidazolium betaine-type amphoteric surfactant, such as an N-fatty acid acyl-N-carboxymethyl-N-hydroxyethylethylenediamine salt or an N-fatty acid acyl-N-carboxyethyl-N-hydroxyethylethylenediamime salt; an amidopropyl betaine-type amphoteric surfactant such as a fatty acid amidopropyl betaine; and an amino acid-type amphoteric surfactant, such as an alkylaminopropionate salt or an alkylaminodipropionate salt. Those amphoteric surfactants may be incorporated alone or in combination thereof.

Examples of the cationic surfactant that may be incorporated into the above-mentioned composition for emulsion polymerization include an alkyl (alkenyl) trimethylammonium salt, a dialkyl(alkenyl) dimethylammonium salt, an alkyl (alkenyl) quaternary ammonium salt, a mono- or di-alkyl(alkenyl) quaternary ammonium salt containing an ether group, an ester group, or an amide group, an alkyl(alkenyl) pyridinium salt, an alkyl (alkenyl) dimethylbenzylammonium salt, an alkyl (alkenyl) isoquinolinium salt, a dialkyl(alkenyl) morphonium salt, an alkyl(alkenyl) amine salt, benzalkonium chloride, and benzethonium chloride. Those cationic surfactants may be incorporated alone or in combination thereof.

Examples of the organic solvent that may be incorporated into the above-mentioned composition for emulsion polymerization include: ketones, such as methyl ethyl ketone, methyl amyl ketone, diethyl ketone, acetone, methyl isopropyl ketone, methyl isobutyl ketone, cyclohexanone, and 2-heptanone; ether-based solvents, such as ethyl ether, dioxane, tetrahydrofuran, 1,2-dimethoxyethane, 1,2-diethoxyethane, and dipropylene glycol dimethyl ether; ester-based solvents, such as methyl acetate, ethyl acetate, n-propyl acetate, isopropyl acetate, n-butyl acetate, cyclohexyl acetate, ethyl lactate, and dimethyl succinate; cellosolve-based solvents, such as ethylene glycol monomethyl ether and ethylene glycol monoethyl ether; alcohol-based solvents, such as methanol, ethanol, propanol, butanol, and amyl alcohol; ether ester-based solvents, such as ethylene glycol monomethyl acetate, ethylene glycol monoethyl acetate, propylene glycol-1-monomethyl ether, propylene glycol-1-monomethyl ether-2-acetate, dipropylene glycol monomethyl ether acetate, 3-methoxybutyl acetate, and ethoxyethyl propionate; and BTX-based solvents, such as benzene, toluene, and xylene. Those organic solvents may be incorporated alone or in combination thereof.

Examples of the plasticizer that may be incorporated into the above-mentioned composition for emulsion polymerization include adipate esters, fumarate esters, sebacate esters, citrate esters, maleate esters, phosphate esters, epoxy fatty acid esters, aliphatic dibasic acid esters, sulfonamides, fatty acid amides, polyesters, and chlorinated paraffins. Those plasticizers may be incorporated alone or in combination thereof.

Examples of the antiseptic that may be incorporated into the above-mentioned composition for emulsion polymerization include paraben, methylparaben, benzoate, benzyl alcohol, isothiazolone, isothiazolinone, phenoxyethanol, phenylethanol, alkanediols, alkylglyceryl ethers, a triazine-based compound, benzoic acid, a benzoate salt, salicylic acid, a salicylate salt, a quaternary ammonium salt-based compound, a halogenated compound, a cyclic organic nitrogen compound, sodium bisulfite, sodium bisulfate, sodium thiosulfate, an ascorbate salt, thimerosal, bronopol, thiabendazole, zinc pyrithione, carbendazim, and a pyridine oxide thiol sodium salt. Those antiseptics may be incorporated alone or in combination thereof.

Examples of the thickener that may be incorporated into the above-mentioned composition for emulsion polymerization include carrageenan, xanthan gum, guar gum, locust bean gum, ghatti gum, karaya gum, pectin, methylcellulose, ethylcellulose, hydroxypropylcellulose, hydroxyethylcellulose, hydroxyethylmethylcellulose, hydroxypropylmethylcellulose, carboxymethylcellulose, polyacrylic acid, a polyacrylic acid-maleic acid copolymer, polyvinyl alcohol, and a carboxyvinyl polymer. Those thickeners may be incorporated alone or in combination thereof.

Examples of the dispersant that may be incorporated into the above-mentioned composition for emulsion polymerization include polyacrylic acid, polymethacrylic acid, polymaleic acid, polyitaconic acid, an acrylic acid-methacrylic acid copolymer, an acrylic acid-maleic acid copolymer, an olefin-maleic acid copolymer, an acrylic acid-sulfonic acid copolymer, a maleic anhydride-styrene copolymer, a maleic anhydride-ethylene copolymer, a maleic anhydride-vinyl acetate copolymer, a maleic anhydride-acrylic acid ester copolymer, and salts thereof. Those dispersants may be incorporated alone or in combination thereof.

When the above-mentioned composition for emulsion polymerization comprises one kind or more kinds selected from the group consisting of: any other anionic surfactant; any other nonionic surfactant; an amphoteric surfactant; a cationic surfactant; an organic solvent; a plasticizer; an antiseptic; a thickener; and a dispersant, the contents of the respective components are not particularly limited, and may be appropriately adjusted in accordance with purposes. For example, the composition may comprise 0.01 mass% to 10 mass% of each component with respect to the total amount of the composition for emulsion polymerization.

### E. Method of producing Polymer Emulsion

A method of producing a polymer emulsion according to at least one embodiment of this disclosure is a method of producing a polymer emulsion, comprising polymerizing one kind or more kinds of polymerizable monomers selected from the group consisting of: an acrylate-based monomer; a styrene-based monomer; a vinyl ester-based monomer; a diene-based monomer; and an acrylonitrile-based monomer in the presence of the surfactant composition described above. A polymer emulsion according to at least one embodiment of this disclosure is obtained by polymerizing the polymerizable monomer in the presence of the surfactant composition described above, and is hence excellent in pressure-sensitive adhesive characteristics, mechanical stability, and water resistance. A specific method of the above-mentioned method of producing a polymer emulsion is not particularly limited. The polymerization is preferably performed by, for example, any one of the following methods: (Method 1) to (Method 3) from the viewpoint that a polymer emulsion excellent in pressure-sensitive adhesive characteristics, mechanical stability, and water resistance is easily obtained.

(Method 1) A monomer mixture is placed in a reaction vessel and heated to a temperature between 40°C and 100°C, and a polymerization initiator dissolved in water or an organic solvent is added dropwise or dividedly over a period of 5 minutes to 4 hours. After that, polymerization at a temperature between 40°C and 100°C for 1 hour to 12 hours is carried out.
(Method 2) 1 Mass% to 50 mass% of a monomer mixture to be used is placed in a reaction vessel and heated to a temperature between 40°C and 90°C, and then a polymerization initiator dissolved in water or an organic solvent is added dropwise or dividedly to cause polymerization at a temperature between 40°C and 90°C for 5 minutes to 4 hours. After that, the remaining monomer mixture is added dropwise or dividedly at a temperature between 40°C and 90°C over a period of about 1 hour to about 6 hours. Then, polymerization at a temperature between 40°C and 90°C for 10 minutes to 3 hours is further carried out.
(Method 3) A polymerization initiator dissolved in water or an organic solvent is placed in a reaction vessel and heated to a temperature between 40°C and 90°C, and then a mixed solution consisting of a monomer mixture and water or an organic solvent is added dropwise or dividedly at a temperature between 40°C and 90°C over a period of 2 hours to 6 hours. Then, polymerization at a temperature of 40°C to 90°C for 1 hour to 5 hours is further carried out.

In the above-mentioned method of producing a polymer emulsion, a ratio between the amounts of the polymerizable monomer and the surfactant composition to be used is not particularly limited, and may be adjusted in accordance with purposes. The surfactant composition is used in an amount of preferably from 0.1 part by mass to 10 parts by mass, more preferably from 0.2 part by mass to 6 parts by mass, still more preferably from 0.5 part by mass to 4 parts by mass with respect to 100 parts by mass of the polymerizable monomer from the viewpoint that a polymer emulsion excellent in pressure-sensitive adhesive characteristics, mechanical stability, and water resistance is easily obtained.

In the above-mentioned method of producing a polymer emulsion, when the polymerization initiator is used, the amount of the polymerization initiator to be used is not particularly limited, and may be adjusted in accordance with purposes. The polymerization initiator is used in an amount of preferably from 0.01 part by mass to 7 parts by mass, more preferably from 0.02 part by mass to 5 parts by mass, still more preferably from 0.05 part by mass to 3 parts by mass with respect to 100 parts by mass of the polymerizable monomer from the viewpoint that a polymer emulsion excellent in pressure-sensitive adhesive characteristics, mechanical stability, and water resistance is easily obtained.

In the above-mentioned method of producing a polymer emulsion, when the polymerizable monomer is polymerized in an aqueous solution in the presence of the above-mentioned surfactant composition, the ratio of each of the above-mentioned surfactant composition, the water, and the polymerizable monomer is not particularly limited, and may be adjusted in accordance with purposes. It is preferred that the amount of the above-mentioned surfactant composition be from 0.1 mass% to 10 mass%, the amount of the water be from 10 mass% to 70 mass%, and the amount of the polymerizable monomer be from 20 mass% to 80 mass%, it is more preferred that the amount of the above-mentioned surfactant composition be from 0.2 mass% to 8 mass%, the amount of the water be from 20 mass% to 65 mass%, and the amount of the polymerizable monomer be from 30 mass% to 75 mass%, it is still more preferred that the amount of the above-mentioned surfactant composition be from 0.5 mass% to 6 mass%, the amount of the water be from 25 mass% to 60 mass%, and the amount of the polymerizable monomer be from 35 mass% to 70 mass%, and it is still more preferred that the amount of the above-mentioned surfactant composition be from 0.5 mass% to 5 mass%, the amount of the water be from 30 mass% to 55 mass%, and the amount of the polymerizable monomer be from 40 mass% to 65 mass% with respect to the total amount of the above-mentioned surfactant composition, the water, and the polymerizable monomer from the viewpoint that a polymer emulsion excellent in pressure-sensitive adhesive characteristics, mechanical stability, and water resistance is easily obtained.

In the above-mentioned method of producing a polymer emulsion, a method of subjecting the polymerizable monomer to emulsion polymerization by using water without using the organic solvent in each of (Method 1) to (Method 3) is preferred from the viewpoint that a polymer emulsion excellent in pressure-sensitive adhesive characteristics, mechanical stability, and water resistance is more easily obtained. In addition, the polymerization is more preferably performed by (Method 2) or (Method 3) described above out of the methods described above, and the polymerization is still more preferably performed by (Method 3) from the viewpoint that a polymer emulsion excellent in pressure-sensitive adhesive characteristics, mechanical stability, and water resistance is more easily obtained.

### F. Polymer Emulsion

A polymer emulsion according to at least one embodiment of this disclosure is a polymer emulsion obtained by polymerizing one kind or more kinds of polymerizable monomers selected from the group consisting of: an acrylate-based monomer; a styrene-based monomer; a vinyl ester-based monomer; a diene-based monomer; and an acrylonitrile-based monomer in the presence of the surfactant composition described above. Specifically, the surfactant composition and the polymerizable monomer used to produce the above-mentioned polymer emulsion may each be those described above. The above-mentioned polymer emulsion is preferably, specifically, a polymer emulsion obtained by the method of producing a polymer emulsion described above from the viewpoint that the polymer emulsion is excellent in pressure-sensitive adhesive characteristics, mechanical stability, and water resistance.

In the above-mentioned polymer emulsion, the content of the polymer is not particularly limited, and may be appropriately adjusted in accordance with purposes. In the above-mentioned polymer emulsion, the content of a polymer of the anionic surfactant represented by the general formula (1), the nonionic surfactant represented by the general formula (2), and the polymerizable monomer is preferably from 30 mass% to 90 mass%, more preferably from 35 mass% to 80 mass%, still more preferably from 40 mass% to 75 mass%, still more preferably from 45 mass% to 70 mass% with respect to the total mass of the polymer emulsion from the viewpoint that the polymer emulsion is excellent in pressure-sensitive adhesive characteristics, mechanical stability, and water resistance.

In addition, in the above-mentioned polymer emulsion, the content of the water is not particularly limited, and may be appropriately adjusted in accordance with purposes. In the above-mentioned polymer emulsion, the content of the water is preferably from 10 mass% to 70 mass%, more preferably from 20 mass% to 65 mass%, still more preferably from 25 mass% to 60 mass%, still more preferably from 30 mass% to 55 mass% with respect to the total mass of the polymer emulsion from the viewpoint that the polymer emulsion is excellent in pressure-sensitive adhesive characteristics, mechanical stability, and water resistance.

The above-mentioned polymer emulsion may be used for a product in which a polymer is typically used without particular limitations. The polymer emulsion may be used as, for example, a polymer emulsion to be used for a paint, an adhesive, a pressure-sensitive adhesive, an ink, a film, a coating agent, a paper coating agent, a sizing agent, a sealer, or the like. In addition, the above-mentioned polymer emulsion may comprise 0.01 mass% to 10 mass% of each of any other anionic surfactant except the anionic surfactant represented by the general formula (1) described above, any other nonionic surfactant except the nonionic surfactant represented by the general formula (2), an amphoteric surfactant, a cationic surfactant, an organic solvent, a plasticizer, an antiseptic, a thickener, and a dispersant with respect to the total amount of the polymer emulsion in accordance with purposes.

### Examples

This disclosure is more specifically described below by way of the Examples. However, this disclosure is not limited to the Examples below. In the Examples below, the term "%" is on a mass basis unless otherwise stated. Respective components used in the Examples and the Comparative Examples are described below.

### <Anionic Surfactant>

Anionic surfactant 1: anionic surfactant represented by the general formula (1) in which R¹ represents an isoundecyl group, "m" represents 10 (average value), and M represents an ammonium group
Anionic surfactant 2: anionic surfactant represented by the general formula (1) in which R¹ represents an isoundecyl group, "m" represents 30 (average value), and M represents an ammonium group

### <Nonionic Surfactant>

Nonionic surfactant 1: nonionic surfactant represented by the general formula (2) in which R² represents an isoundecyl group and "n" represents 10 (average value)
Nonionic surfactant 2: nonionic surfactant represented by the general formula (2) in which R² represents an isoundecyl group and "n" represents 30 (average value)

### <Mixed Monomer>

Mixed monomer 1: mixed monomer consisting of 48 mass% of butyl acrylate, 40 mass% of 2-ethylhexyl acrylate, 10 mass% of styrene, and 2 mass% of acrylic acid
Mixed monomer 2: mixed monomer consisting of 48 mass% of butyl acrylate, 40 mass% of 2-ethylhexyl acrylate, 10 mass% of methyl methacrylate, and 2 mass% of acrylic acid

### <Polymerization Initiator>

Polymerization initiator 1: ammonium persulfate

### [Preparation of Surfactant Composition]

The anionic surfactant 1 and the nonionic surfactant 1, and the anionic surfactant 2 and the nonionic surfactant 2 were mixed at mass ratios shown in Tables 1 and 2, respectively. Thus, surfactant compositions 1 to 8 were prepared.

**Table 1**

| | Example 1 | Example 2 | Comparative Example 1 | Comparative Example 2 |
|---|---|---|---|---|
| | Surfactant composition 1 | Surfactant composition 2 | Surfactant composition 3 | Surfactant composition 4 |
| Anionic surfactant 1 | 99.0 mass% | 96.0 mass% | 100 mass% | 90.0 mass% |
| Nonionic surfactant 1 | 1.0 mass% | 4.0 mass% | - | 10.0 mass% |

**Table 2**

| | Example 3 | Example 4 | Comparative Example 3 | Comparative Example 4 |
|---|---|---|---|---|
| | Surfactant composition 5 | Surfactant composition 6 | Surfactant composition 7 | Surfactant composition 8 |
| Anionic surfactant 2 | 99.0 mass% | 96.0 mass% | 100 mass% | 90.0 mass% |
| Nonionic surfactant 2 | 1.0 mass% | 4.0 mass% | - | 10.0 mass% |

### [Preparation of Polymer Emulsion]

103 Grams of distilled water was charged into a reaction vessel equipped with a reflux condenser, a stirrer, a dropping funnel, and a thermometer. The inside of a system was purged with nitrogen gas, and then heated to a temperature of 80°C. Next, 1.2 g of ammonium persulfate serving as a polymerization initiator was charged into the reaction vessel, and then 47 g of distilled water, and a mixed solution of 5 g of the surfactant composition and 200 g of the mixed monomer in a combination shown in each of Tables 3 and 4 were each dropped into the reaction vessel kept at 80°C over a period of 5 hours to perform a polymerization reaction. After the completion of the dropping, the reaction was further performed at 80°C for 1 hour. Thus, polymer emulsions of Examples 5 to 12 and Comparative Examples 5 to 12 were obtained. The final blending ratios of the respective polymer emulsions are shown in Tables 3 and 4.

### [Evaluation of Pressure-sensitive Adhesive Characteristics]

The obtained polymer emulsions of Examples 5 to 12 and Comparative Examples 5 to 12 were each subjected to measurement for holding time in conformity with the holding force test of JIS Z 0237 (2009) and measurement for peel strength in conformity with the peeling pressure-sensitive adhesive strength test of JIS Z 0237 (2009), and the pressure-sensitive adhesive characteristics of each of the polymer emulsions were evaluated based on the following evaluation criteria for pressure-sensitive adhesive characteristics. Of those, a method of measuring the holding time is as described below. First, each of the polymer emulsions of Examples 5 to 12 and Comparative Examples 5 to 12 was applied to a PET film having a thickness of 38 µm, and was then dried at 105°C for 3 minutes to produce a coating film having a film thickness of 20 µm. Subsequently, a test piece measuring 25 mm by 25 mm was pressure-bonded onto a SUS plate with a 2 kg pressure roller so that a coating film side served as an adhesive surface. After curing for 24 hours, a load of 1 kg was hung on the resultant, and an elapsed time for the test piece to fall under a 40°C environment was measured as a holding time. In addition, the measurement for peel strength is as described below. First, each of the polymer emulsions of Examples 5 to 12 and Comparative Examples 5 to 12 was applied to a PET film having a thickness of 38 µm, and was then dried at 105°C for 3 minutes to produce a coating film having a film thickness of 20 µm. Subsequently, a test piece measuring 25 mm by 25 mm was pressure-bonded onto a SUS plate with a 2 kg pressure roller so that a coating film side served as an adhesive surface. After curing for 24 hours, as peel strength, a 180° peel strength was measured at a speed of 300 mm/min. Then, the pressure-sensitive adhesive characteristics were evaluated by using the measurement results of the holding time and the peel strength of each of the polymer emulsions based on the following evaluation criteria for pressure-sensitive adhesive characteristics. The respective evaluation results are shown in Tables 3 and 4.

### <Evaluation Criteria for Pressure-sensitive Adhesive Characteristics>

o (excellent): The holding time was 6 hours or more and the peel strength was 5.0 N or more.
Δ (acceptable): The holding time was 6 hours or more and the peel strength was less than 5.0 N, or the holding time was less than 6 hours and the peel strength was 5.0 N or more.
× (poor): The holding time was less than 6 hours and the peel strength was less than 5.0 N.

### [Evaluation of Mechanical Stability]

50 Grams of each of the obtained polymer emulsions of Examples 5 to 12 and Comparative Examples 5 to 12 was weighed, a load of 20 kg was applied thereto with a Maron stability tester at a rotation number of 1,000 rpm for 10 minutes, and then the resultant was filtered through a 80-mesh wire mesh. Subsequently, a residue (aggregate) on the wire mesh was washed with water and dried at 105°C for 2 hours. After that, the mass thereof was measured to calculate an amount (mass%) of the aggregate with respect to the mass of a solid content in each polymer emulsion used, and the mechanical stability was evaluated based on the calculation results and the following evaluation criteria for mechanical stability. The respective evaluation results are shown in Tables 3 and 4.

### <Evaluation Criteria for Mechanical Stability>

o (excellent): The amount of the aggregate was less than 0.50 mass%.
× (poor): The amount of the aggregate was 0.50 mass% or more.

### [Evaluation of Water Resistance]

Each of the obtained polymer emulsions of Examples 5 to 12 and Comparative Examples 5 to 12 was applied to a glass plate having a thickness of 2 mm so that its thickness at the time of the application became 100 µm, and was then dried at 105°C for 3 minutes to produce a coating film. Subsequently, the resultant was immersed in water at 25°C for 6 hours and taken out. The appearance of the coating film was visually observed, and the water resistance was evaluated based on the following evaluation criteria for water resistance. The respective evaluation results are shown in Tables 3 and 4.

### <Evaluation Criteria for Water Resistance>

o (acceptable): No whitening was observed.
× (unacceptable): Whitening was observed.

**Table 3**

| | | Example 5 | Example 6 | Comparative Example 5 | Comparative Example 6 | Example 7 | Example 8 | Comparative Example 7 | Comparative Example 8 |
|---|---|---|---|---|---|---|---|---|---|
| Polymer emuulsion | Surfactant composition 1 | 5.0 g | | | | 5.0 g | | | |
| | Surfactant composition 2 | | 5.0 g | | | | 5.0 g | | |
| | Surfactant composition 3 | | | 5.0 g | | | | 5.0 g | |
| | Surfactant composition 4 | | | | 5.0 g | | | | 5.0 g |
| | Mixed monomer 1 | 200 g | 200 g | 200 g | 200 g | | | | |
| | Mixed monomer 2 | | | | | 200 g | 200 g | 200 g | 200 g |
| | Polymerization initiator 1 | 1.2 g | 1.2 g | 1.2 g | 1.2 g | 1.2 g | 1.2 g | 1.2 g | 1.2 g |
| | Water | 150 g | 150 g | 150 g | 150 g | 150 g | 150 g | 150 g | 150 g |
| Evaluation results | Pressure-sensitive adhesive characteristics | ○ | ○ | ○ | ○ | ○ | ○ | × | Δ |
| | Mechanical stability | ○ | ○ | × | ○ | ○ | ○ | × | ○ |
| | Water resistance | ○ | ○ | ○ | × | ○ | ○ | ○ | × |

**Table 4**

| | | Example 9 | Example 10 | Comparative Example 9 | Comparative Example 10 | Example 11 | Example 12 | Comparative Example 11 | Comparative Example 12 |
|---|---|---|---|---|---|---|---|---|---|
| Polymer emuulsion | Surfactant composition 5 | 5.0 g | | | | 5.0 g | | | |
| | Surfactant composition 6 | | 5.0 g | | | | 5.0 g | | |
| | Surfactant composition 7 | | | 5.0 g | | | | 5.0 g | |
| | Surfactant composition 8 | | | | 5.0 g | | | | 5.0 g |
| | Mixed monomer 1 | 200 g | 200 g | 200 g | 200 g | | | | |
| | Mixed monomer 2 | | | | | 200 g | 200 g | 200 g | 200 g |
| | Polymerization initiator 1 | 1.2 g | 1.2 g | 1.2 g | 1.2 g | 1.2 g | 1.2 g | 1.2 g | 1.2 g |
| | Water | 150 g | 150 g | 150 g | 150 g | 150 g | 150 g | 150 g | 150 g |
| Evaluation results | Pressure-sensitive adhesive characteristics | ○ | ○ | ○ | Δ | ○ | ○ | ○ | Δ |
| | Mechanical stability | ○ | ○ | × | ○ | ○ | ○ | × | ○ |
| | Water resistance | ○ | ○ | ○ | × | ○ | ○ | ○ | × |

From the above-mentioned results, it is found that a polymer emulsion excellent in pressure-sensitive adhesive characteristics, mechanical stability, and water resistance can be obtained by polymerizing various monomers in the presence of the surfactant composition disclosed herein.

## Claims

1. A surfactant composition, comprising:
95.5 mass% to 99.2 mass% of an anionic surfactant represented by the following general formula (1) with respect to a total amount of the surfactant composition; and
0.8 mass% to 4.5 mass% of a nonionic surfactant represented by the following general formula (2) with respect to the total amount of the surfactant composition: 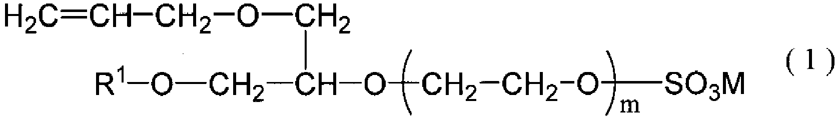 where R¹ represents a linear or branched alkyl group having 8 to 15 carbon atoms, "m" represents a number of from 5 to 50, and M represents a hydrogen atom, an alkali metal atom, or an ammonium group; and 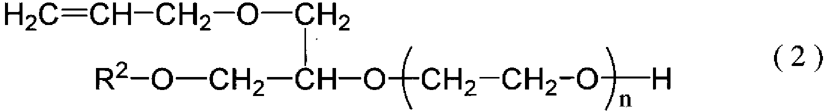 where R² represents a linear or branched alkyl group having 8 to 15 carbon atoms, and "n" represents a number of from 5 to 50.

2. The surfactant composition according to claim 1, wherein R¹ of the anionic surfactant represented by the general formula (1) and R² of the nonionic surfactant represented by the general formula (2) represent the same alkyl group.

3. A composition for emulsion polymerization, comprising the surfactant composition of claim 1 or 2.

4. A method of producing a polymer emulsion, comprising polymerizing one kind or more kinds of polymerizable monomers selected from the group consisting of: an acrylate-based monomer; a styrene-based monomer; a vinyl ester-based monomer; a diene-based monomer; and an acrylonitrile-based monomer in the presence of the surfactant composition of claim 1 or 2.

5. A polymer emulsion obtained by polymerizing one kind or more kinds of polymerizable monomers selected from the group consisting of: an acrylate-based monomer; a styrene-based monomer; a vinyl ester-based monomer; a diene-based monomer; and an acrylonitrile-based monomer in the presence of the surfactant composition of claim 1 or 2.

6. A use of the surfactant composition of claim 1 or 2 for producing a polymer emulsion by emulsion polymerization.

7. The use of the surfactant composition according to claim 6, wherein one kind or more kinds of polymerizable monomers selected from the group consisting of: an acrylate-based monomer; a styrene-based monomer; a vinyl ester-based monomer; a diene-based monomer; and an acrylonitrile-based monomer is subjected to emulsion polymerization.

## Patentansprüche

1. Tensidzusammensetzung, umfassend:
95,5 Masse-% bis 99,2 Masse-% eines anionischen Tensids, dargestellt durch die folgende allgemeine Formel (1), in Bezug auf eine Gesamtmenge der Tensidzusammensetzung; und
0,8 Masse-% bis 4,5 Masse-% eines nichtionischen Tensids, dargestellt durch die folgende allgemeine Formel (2), bezogen auf eine Gesamtmenge der Tensidzusammensetzung: 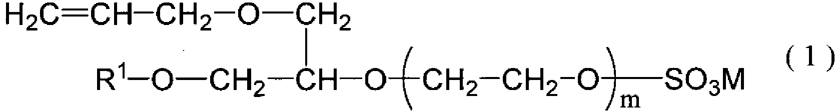 wobei R¹ eine lineare oder verzweigte Alkylgruppe mit 8 bis 15 Kohlenstoffatomen darstellt, "m" eine Zahl von 5 bis 50 angibt und M ein Wasserstoffatom, ein Alkalimetallatom oder eine Ammoniumgruppe darstellt; und 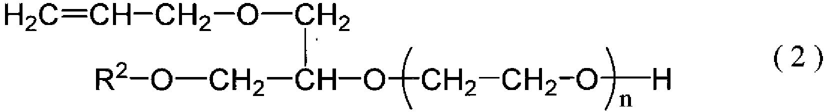 wobei R² eine lineare oder verzweigte Alkylgruppe mit 8 bis 15 Kohlenstoffatomen darstellt und "n" eine Zahl von 5 bis 50 angibt.

2. Tensidzusammensetzung nach Anspruch 1, wobei R¹ des anionischen Tensidn, dargestellt durch die allgemeine Formel (1), und R² des nichtionischen Tensids, dargestellt durch die allgemeine Formel (2), die gleiche Alkylgruppe darstellen.

3. Zusammensetzung zur Emulsionspolymerisation, umfassend die Tensidzusammensetzung nach Anspruch 1 oder 2.

4. Verfahren zur Herstellung einer Polymeremulsion, umfassend die Polymerisation eines oder mehrerer polymerisierbarer Monomere, ausgewählt aus der Gruppe, bestehend aus: einem Monomer auf Acrylatbasis ; einem Monomer auf Styrolbasis; einem Monomer auf Vinylesterbasis; einem Monomer auf Dienbasis; und einem Monomer auf Acrylnitrilbasis, in der Gegenwart der Tensidzusammensetzung nach Anspruch 1 oder 2.

5. Polymeremulsion, erhalten durch Polymerisation eines oder mehrerer polymerisierbarer Monomere, ausgewählt aus der Gruppe, bestehend aus: einem Monomer auf Acrylatbasis; einem Monomer auf Styrolbasis; einem Monomer auf Vinylesterbasis; einem Monomer auf Dienbasis; und einem Monomer auf Acrylnitrilbasis, in der Gegenwart der Tensidzusammensetzung nach Anspruch 1 oder 2.

6. Verwendung der Tensidzusammensetzung nach Anspruch 1 oder 2 zur Herstellung einer Polymeremulsion durch Emulsionspolymerisation.

7. Verwendung der Tensidzusammensetzung nach Anspruch 6, wobei ein oder mehrere polymerisierbare Monomere, ausgewählt aus der Gruppe, bestehend aus: einem Acrylat-basierten Monomer; einem Styrol-basierten Monomer; einem Vinylester-basierten Monomer; einem Dien-basierten Monomer; und einem Acrylnitril-basierten Monomer, einer Emulsionspolymerisation unterzogen wird bzw. werden.

## Revendications

1. Composition de tensioactif, comprenant :
95,5 % en masse à 99,2 % en masse d'un tensioactif anionique représenté par la formule générale suivante (1) par rapport à une quantité totale de la composition de tensioactif ; et
0,8 % en masse à 4,5 % en masse d'un tensioactif non ionique représenté par la formule générale suivante (2) par rapport à la quantité totale de la composition de tensioactif : 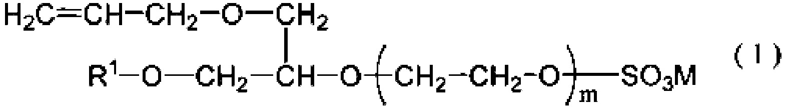 où R¹ représente un groupe alkyle linéaire ou ramifié ayant 8 à 15 atomes de carbone, « m » représente un nombre allant de 5 à 50, et M représente un atome d'hydrogène, un atome de métal alcalin ou un groupe ammonium; et 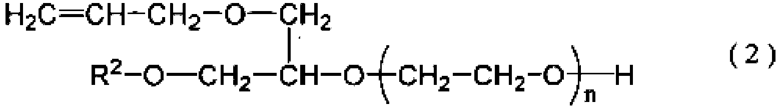 où R² représente un groupe alkyle linéaire ou ramifié ayant 8 à 15 atomes de carbone et « n » représente un nombre allant de 5 à 50.

2. Composition de tensioactif selon la revendication 1, dans laquelle R¹ du tensioactif anionique représenté par la formule générale (1) et R² du tensioactif non ionique représenté par la formule générale (2) représentent le même groupe alkyle.

3. Composition pour polymérisation en émulsion, comprenant la composition de tensioactif selon la revendication 1 ou 2.

4. Procédé de production d'une émulsion polymère, comprenant polymériser un type ou plusieurs types de monomères polymérisables sélectionnés parmi le groupe constitué de : un monomère à base d'acrylate ; un monomère à base de styrène ; un monomère à base d'ester vinylique ; un monomère à base de diène ; et un monomère à base d'acrylonitrile en présence de la composition de tensioactif selon la revendication 1 ou 2.

5. Émulsion polymère obtenue en polymérisant un type ou plusieurs types de monomères polymérisables sélectionnés parmi le groupe constitué de : un monomère à base d'acrylate ; un monomère à base de styrène ; un monomère à base d'ester vinylique ; un monomère à base de diène ; et un monomère à base d'acrylonitrile en présence de la composition de tensioactif selon la revendication 1 ou 2.

6. Utilisation de la composition de tensioactif selon la revendication 1 ou 2 pour produire une émulsion polymère par polymérisation en émulsion.

7. Utilisation de la composition de tensioactif selon la revendication 6, dans laquelle un type ou plusieurs types de monomères polymérisables sélectionnés parmi le groupe constitué de : un monomère à base d'acrylate ; un monomère à base de styrène ; un monomère à base d'ester vinylique ; un monomère à base de diène ; et un monomère à base d'acrylonitrile est soumis à une polymérisation en émulsion.
